(19) Europäisches Patentamt / European Patent Office / Office européen des brevets

(11) **EP 2 906 734 B1**

(12) **FASCICULE DE BREVET EUROPEEN**

(45) Date de publication et mention de la délivrance du brevet:
**01.06.2022 Bulletin 2022/22**

(21) Numéro de dépôt: **14706122.0**

(22) Date de dépôt: **10.02.2014**

(51) Classification Internationale des Brevets (IPC):
**C23C 2/06** (2006.01)   **C23C 2/20** (2006.01)
**C23C 2/26** (2006.01)

(52) Classification Coopérative des Brevets (CPC):
**C23C 2/06; B32B 15/013; C23C 2/02; C23C 2/20; C23C 2/26**

(86) Numéro de dépôt international:
**PCT/IB2014/058879**

(87) Numéro de publication internationale:
**WO 2014/135999 (12.09.2014 Gazette 2014/37)**

(54) **PROCÉDÉ DE RÉALISATION D'UNE TÔLE À REVÊTEMENT ZnAl AVEC UN ESSORAGE OPTIMISÉ, TÔLE, PIÈCE ET VÉHICULE CORRESPONDANTS**

**VERFAHREN ZUR HERSTELLUNG EINES BLECHS MIT EINER ZNAL-BESCHICHTUNG UND MIT OPTIMIERTER TROCKNUNG, ENTSPRECHENDES BLECH, TEIL UND FAHRZEUG**

**A METHOD FOR MANUFACTURING A METAL SHEET WITH A ZNAL COATING AND WITH OPTIMISED DRYING, CORRESPONDING METAL SHEET, PART AND VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.03.2013 PCT/FR2013/050479**

(43) Date de publication de la demande:
**19.08.2015 Bulletin 2015/34**

(60) Demande divisionnaire:
**16161736.0 / 3 056 581**

(73) Titulaire: **Arcelormittal**
**1160 Luxembourg (LU)**

(72) Inventeurs:
• **MATAIGNE, Jean-Michel**
  **F-60300 Senlis (FR)**
• **DAUCHELLE, Didier**
  **F-60100 Creil (FR)**
• **BERTRAND, Florence**
  **57160 Scy Chazelles (FR)**

(74) Mandataire: **Lavoix**
**2, place d'Estienne d'Orves**
**75441 Paris Cedex 09 (FR)**

(56) Documents cités:
EP-A1- 2 119 804     WO-A1-2010/130883
WO-A1-2010/130884

• **Deutscher O. et al: "Characterising the surface waviness of hot dip galvanised steel sheets for optical high-quality paintability (Carsteel)", European Comission, Directorate-General for Reasearch , 2009, pages 1-133, XP002717503, ISSN: 1018-5593, DOI: 10.2777/65928 ISBN: 978-92-79-11303-1 Extrait de l'Internet: URL:http://bookshop.europa.eu/is-bin/INTER SHOP.enfinity/WFS/EU-Bookshop-Site/en_GB/-/EUR/ViewPublication-Start?PublicationKey= KINA23854 [extrait le 2013-12-02]**

**Description**

La présente invention concerne un procédé de réalisation d'une tôle comprenant un substrat en acier dont au moins une face est revêtue par un revêtement métallique comprenant de l'Al, le reste du revêtement métallique étant du Zn, des impuretés inévitables et éventuellement un ou plusieurs éléments additionnels choisis parmi Si, Sb, Pb, Ti, Ca, Mn, Sn, La, Ce, Cr, Zr, ou Bi, la teneur en poids de chaque élément additionnel dans le revêtement métallique étant inférieure à 0,3%, le revêtement métallique ayant une teneur en poids d'aluminium comprise entre 0,2 et 0,7%, le procédé comprenant au moins des étapes de :

- fourniture du substrat,
- dépôt d'un revêtement métallique sur au moins une face par trempe du substrat dans un bain pour obtenir la tôle,
- essorage du revêtement métallique par au moins une buse projetant par au moins une sortie un gaz d'essorage sur le revêtement métallique, la tôle défilant devant la buse et le gaz étant éjecté de la buse selon une direction principale d'éjection, et
- solidification du revêtement métallique.

Une telle tôle est plus particulièrement destinée à la fabrication de pièces de carrosserie pour un véhicule terrestre à moteur tel qu'un véhicule automobile.

La tôle est alors découpée et déformée pour réaliser des pièces qui sont assemblées pour former la carrosserie ou caisse.

Cette caisse est ensuite revêtue par un film de peinture (ou système peinture), lequel assure un bon aspect de surface et participe, avec le revêtement métallique à base de zinc, à la protection contre la corrosion.

Les revêtements à base de zinc des tôles présentent ce qu'on appelle une ondulation de leurs surfaces extérieures, qui ne peut actuellement être compensée que par des épaisseurs importantes de peinture, sous peine d'avoir un aspect dit de « peau d'orange » inacceptable pour des pièces de carrosserie.

L'ondulation W (waviness en anglais) de la surface extérieure d'un revêtement est une irrégularité géométrique douce, pseudopériodique, d'assez grande longueur d'onde (0,8 à 10 mm) que l'on distingue de la rugosité R qui correspond aux irrégularités géométriques de faibles longueurs d'ondes.

Dans la présente invention, la moyenne arithmétique Wa du profil d'ondulation, exprimée en $\mu$m, a été retenue pour caractériser l'ondulation de la surface extérieure d'un revêtement de tôle, et les mesures d'ondulation ont été réalisées avec un seuil de coupure de 0,8 mm et désignées par $Wa_{0,8}$.

Une diminution de l'ondulation $Wa_{0,8}$ peut permettre de réduire l'épaisseur du film de peinture utilisé pour atteindre une qualité donnée d'aspect peint ou, à épaisseur constante de film de peinture, d'améliorer la qualité de l'aspect peint.

Le but de l'invention est donc de fournir un procédé de réalisation d'une tôle, comprenant un substrat dont au moins une face a été revêtue au trempé par un revêtement métallique à base de zinc et comprenant entre 0,2 et 0,7% en poids d'Al, la surface extérieure du revêtement métallique ayant une ondulation $Wa_{0,8}$ réduite.

A cet effet, l'invention a pour objet un procédé selon la revendication 1.

Le procédé peut également comprendre les caractéristiques des revendications 2 à 7, prises isolément ou en combinaison.

L'invention a également pour objet une tôle selon la revendication 9.

La tôle peut également comprendre les caractéristiques des revendications 10 et 11, prises isolément ou en combinaison.

L'invention a également pour objet une pièce selon la revendication 12.

La pièce peut également comprendre les caractéristiques des revendications 13 à 17, prises isolément ou en combinaison.

L'invention a également pour objet un véhicule selon la revendication 18.

L'invention va être illustrée par des exemples donnés à titre indicatif, et non limitatif, et en référence aux figures annexées sur lesquelles :

- la figure 1 est une vue schématique en coupe illustrant la structure d'une tôle selon l'invention,
- la figure 2 est une vue schématique de côté illustrant un creuset et des buses d'essorage pour réaliser la tôle de la figure 1,
- la figure 3 est une vue partielle, schématique et agrandie de la partie cerclée III de la figure 2, et
- la figure 4 est une vue schématique prise selon la flèche IV de la figure 3, et illustrant la forme de la sortie de la buse de la figure 3.

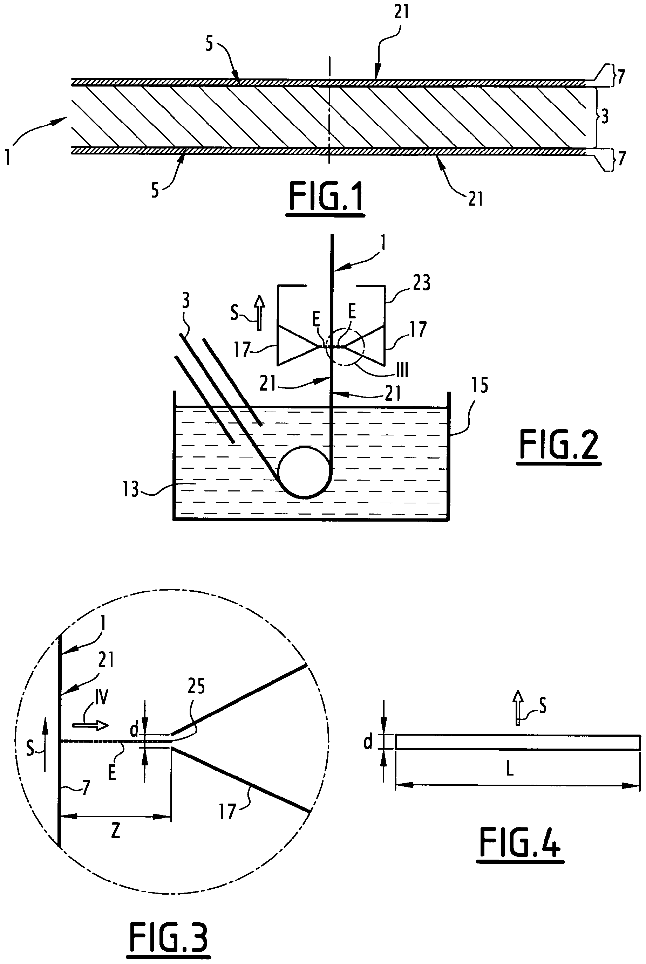

La tôle 1 de la figure 1 comprend un substrat 3 en acier recouvert sur chacune de ses deux faces 5 par un revêtement métallique 7.

On observera que les épaisseurs relatives du substrat 3 et des différentes couches le recouvrant n'ont pas été respectées sur la figure 1 afin de faciliter la représentation.

Les revêtements 7 présents sur les deux faces 5 sont analogues et un seul sera décrit en détail par la suite. En variante (non-représentée), seule une des faces 5 présente un revêtement 7.

Le revêtement 7 a généralement une épaisseur inférieure ou égale à 25 $\mu$m et vise à protéger le substrat 3 contre la corrosion.

Le revêtement 7 comprend du zinc et de l'aluminium. La teneur en poids d'aluminium du revêtement métallique 7 est comprise entre 0,2 et 0,7%, de préférence entre 0,2 et 0,6%, et de préférence encore entre 0,2 et 0,5%. Comme indiqué ci-dessous, les bornes de ces plages de teneur d'aluminium sont supérieures à celles du bain utilisé pour réaliser le revêtement 7. Ceci s'explique par la formation d'intermétalliques à la jonction entre le substrat 3 et le revêtement 7 qui conduit à une augmentation de la teneur en aluminium dans le revêtement 7.

Pour réaliser la tôle 1, on peut par exemple procéder comme suit.

On utilise un substrat 3 sous forme d'une bande obtenue par exemple par laminage à chaud puis à froid.

De préférence, pour le laminage à froid, on commence par laminer à froid le substrat 3 avec un taux de réduction généralement compris entre 60 et 85%, de manière à obtenir un substrat 3 d'épaisseur comprise par exemple entre 0,2 et 2 mm.

Dans un mode de réalisation préféré, on veille à ce qu'au moins la dernière passe du laminage à froid soit réalisée avec des cylindres de travail dits « lisses », c'est à dire des cylindres rectifiés et non gravés, dont les surfaces de travail présentent une rugosité $Ra_{2,5}$, c'est-à-dire mesurée avec un seuil de coupure à 2,5 mm, inférieure à 0,5 $\mu$m.

On rappelle que les cylindres de travail sont les cylindres du laminoir directement en contact du substrat 3 pour assurer sa déformation. On désigne par le terme surface de travail leurs surfaces en contact du substrat 3.

Les cylindres de travail lisses seront présents au moins dans la ou les dernière(s) cage(s) du laminoir lorsque l'on considère le sens de défilement du substrat 3 dans le laminoir.

L'utilisation de cylindres de travail lisses au moins pour la dernière passe permet de mieux contrôler l'ondulation $Wa_{0,8}$ d'une part de la tôle 1 obtenue ultérieurement par revêtement du substrat 3 et d'autre part des pièces que l'on peut produire en déformant la tôle 1.

En particulier, un tel laminage à froid permet de réduire l'ondulation $Wa_{0,8}$ par rapport à un laminage ne faisant appel qu'à des cylindres à plus forte rugosité, gravés soit par gravillonnage, soit par décharge électrique (cylindres dits EDT, Electron Discharge Texture en anglais), soit encore par faisceau d'électrons (cylindres dits EBT, Electron Beam Texture en anglais).

Le substrat 3 laminé à froid peut ensuite subir un recuit réalisé de manière conventionnelle dans un four de recuit sous atmosphère réductrice, en vue de le recristalliser après l'écrouissage qu'il a subi lors de l'opération de laminage à froid.

Le recuit de recristallisation permet en outre d'activer les faces 5 du substrat 3 afin de favoriser les réactions chimiques nécessaires à l'opération ultérieure de trempé.

Selon la nuance de l'acier, le recuit de recristallisation est effectué à une température comprise entre 650 et 900°C pendant un temps nécessaire à la recristallisation de l'acier et à l'activation des faces 5.

Le substrat 3 est ensuite refroidi à une température voisine de celle d'un bain 13 contenu dans un creuset 15.

La composition du bain 13 est à base de zinc et contient entre 0,1 et 0,5% en poids d'aluminium, de préférence entre 0,1 et 0,4%, et de préférence encore entre 0,1 et 0,3%.

La composition du bain 13 peut également contenir jusqu'à 0,3% en poids d'éléments optionnels d'addition tels que Si, Sb, Pb, Ti, Ca, Mn, Sn, La, Ce, Cr, Ni, Zr ou Bi.

Ces différents éléments peuvent permettre, entre autres, d'améliorer la résistance à la corrosion du revêtement ou bien sa fragilité ou son adhésion, par exemple.

L'homme du métier qui connaît leurs effets sur les caractéristiques du revêtement saura les employer en fonction du but complémentaire recherché. On a également vérifié que ces éléments n'interféraient pas avec la maîtrise de l'ondulation obtenue par le procédé selon l'invention.

Enfin, le bain 13 peut contenir des impuretés inévitables provenant des lingots d'alimentation du creuset ou bien encore du passage du substrat 3 dans le bain 13. On pourra ainsi citer notamment, le fer.

Après passage dans le bain 13, le substrat 3 est revêtu sur ses deux faces 5 par les revêtements 7 pour obtenir la tôle 1.

Comme illustré par la figure 2, la tôle 1 est ensuite soumise à un essorage au moyen de buses 17 placées de part et d'autre de la tôle 1 et qui projettent un gaz d'essorage, par exemple de l'air ou un gaz inerte, vers les surfaces extérieures 21 des revêtements 7. Le gaz d'essorage est éjecté de chaque buse 17 le long d'une direction principale d'éjection E. Les directions principales d'éjection E de chaque buse 17 sont matérialisées en pointillés sur les figures 2 et 3.

Dans l'exemple représenté, les directions E sont horizontales et orthogonales à la tôle 1. Dans d'autres modes de réalisation, les directions E peuvent avoir d'autres inclinaisons par rapport à la tôle 1.

La vitesse V de défilement du substrat 3 sur la ligne de production utilisée et donc devant les buses 17 est en général comprise entre 80m/min et 300 m/min, et elle est de préférence supérieure à 120 m/min, voire 150m/min.

Afin de limiter l'oxydation des revêtements 7, on peut prévoir un caisson de confinement 23 pour confiner l'atmosphère autour de la tôle 1 en aval des buses 17. Le terme aval s'entend ici par rapport au sens de défilement S de la tôle 1 en regard des buses 17.

Le caisson de confinement 23 peut en variante se prolonger vers l'amont jusqu'à la surface du bain 13 ou jusqu'à une position intermédiaire entre les buses 17 et la surface du bain 13.

Dans certaines variantes, l'installation peut ne pas comprendre de caisson de confinement.

Dans l'exemple décrit ci-dessus, les buses 17 ont des structures, des positionnements par rapport à la tôle 1 qui sont analogues et elles fonctionnent avec des réglages analogues. Ainsi, seule la buse 17 droite de la figure 2 sera décrite ci-dessous, par référence à la figure 3.

En variante, les buses 17 peuvent avoir des structures différentes, des positions différentes et/ou fonctionner avec des réglages différents. On peut également ne prévoir une buse que d'un côté de la tôle 1.

La buse 17 présente une sortie 25 par laquelle le gaz d'essorage est éjecté vers la surface extérieure 21 du revêtement 7 placé en regard. Différentes formes extérieures sont envisageables pour la buse 17.

La sortie 25 de la buse 17 est disposée à une distance de Z de la tôle 1 le long de la direction principale d'éjection E. Comme illustré par la figure 4, la sortie 25 se présente généralement sous forme d'une fente qui s'étend, perpendiculairement au sens de défilement S et au plan de la figure 3, sur une largeur L au moins égale à la largeur de la tôle 1.

Généralement, la hauteur de la sortie 25, c'est-à-dire sa dimension parallèlement au sens S de défilement de la tôle 1 devant la buse 17, est constante comme illustré par la figure 4. Cela étant, dans certaines variantes, cette hauteur peut varier sur la largeur de la sortie 25. Ainsi, la sortie 25 peut avoir par exemple une forme légèrement évasée vers ses extrémités (forme de nœud papillon).

Afin de tenir compte de ces éventuelles variations de hauteur et des différents modes de réalisation possibles, on considèrera par la suite la hauteur moyenne d de la sortie 25 sur sa largeur L.

La pression du gaz d'essorage dans la buse 17 est notée P et la fraction volumique d'oxygène dans le gaz d'essorage est notée $fO_2$.

Selon l'invention, l'une au moins des équations suivantes est respectée :

$$\frac{Z}{d} + 18\ln\left(\frac{Z}{d}\right) < 8\ln\left(\frac{P}{V}\right) - 27,52 \qquad\qquad \text{(A)}$$

$$fO_2 < \frac{2,304.10^{-3}}{\left(27,52 + \dfrac{Z}{d} + 8\ln\left(\dfrac{V}{P}\left(\dfrac{Z}{d}\right)^{2,25}\right)\right)^2} \qquad\qquad \text{(B)}$$

où :

Z est exprimée en mm
d est exprimée en mm
V est exprimée en m.s$^{-1}$
P est exprimée en N.m$^{-2}$

En d'autres termes, si l'équation (A) n'est pas respectée, il faut que l'équation (B) le soit et vice versa. Les équations (A) et (B) peuvent également être simultanément respectées.

Généralement, les paramètres V et d sont imposés par la ligne de production utilisée. Il ne reste donc plus que Z et P, voire $fO_2$, à ajuster pour satisfaire aux exigences ci-dessus.

Des paramètres ainsi fixés permettent d'atteindre, après solidification des revêtements 7 et avant éventuel skin-pass, une ondulation $Wa_{0,8}$ inférieure ou égale à 0,55 $\mu$m comme illustré par l'exemple 1 ci-dessous.

De manière encore plus avantageuse, l'une au moins des équations suivantes est respectée :

$$\frac{Z}{d} + 18\ln\left(\frac{Z}{d}\right) < 8\ln\left(\frac{P}{V}\right) - 36,32 \qquad\qquad \text{(C)}$$

$$fO_2 < \frac{2{,}304 . 10^{-3}}{\left(36{,}32 + \dfrac{Z}{d} + 8\ln\left(\dfrac{V}{P}\left(\dfrac{Z}{d}\right)^{2{,}25}\right)\right)^2} \qquad\text{(D)}$$

où :

Z est exprimée en mm
d est exprimée en mm
V est exprimée en m.s$^{-1}$
P est exprimée en N.m$^{-2}$

En d'autres termes, si l'équation (C) n'est pas respectée, il faut que l'équation (D) le soit et vice versa. Les équations (C) et (D) peuvent également être simultanément respectées.

Si les paramètres Z, d, V, P et fO$_2$ satisfont à l'équation (C) et/ou à l'équation (D) alors on atteint, après solidification des revêtements 7 et avant éventuel skin-pass, une ondulation Wa$_{0,8}$ inférieure ou égale à 0,35 $\mu$m.

On laisse refroidir ensuite les revêtements 7 de façon contrôlée pour qu'ils se solidifient.

Comme indiqué précédemment, à l'issue de ces refroidissements 7 les surfaces extérieures 21 des revêtements 7 ont des ondulations Wa$_{0,8}$ inférieure à 0,55 $\mu$m, voire inférieure à 0,35 $\mu$m.

En variante, un brossage peut être effectué pour enlever le revêtement 7 déposé sur une face 5 de sorte qu'une seule des faces 5 du substrat 3 sera en définitive revêtue par un revêtement 7.

Lorsque les revêtements 7 sont complètement refroidis, la tôle 1 peut subir une opération de skin-pass pour conférer aux surfaces extérieures 21 des revêtements 7 une texture facilitant la mise en forme ultérieure de la tôle 1.

En effet, l'opération de skin-pass permet de transférer aux surfaces extérieures 21 des revêtements 7 de la tôle 1 une rugosité suffisante pour que sa mise en forme s'effectue dans de bonnes conditions, en favorisant une bonne rétention de l'huile appliquée sur la tôle 1 avant sa mise en forme. Le taux d'allongement de la tôle 1 lors de l'opération de skin-pass est généralement compris entre 0,5 et 2%.

De préférence, l'opération de skin-pass permettra de conserver aux surfaces extérieures 21 des revêtements 7 une ondulation Wa$_{0,8}$ inférieure à 0,55 $\mu$m, et de préférence inférieure à 0,35 $\mu$m.

Dans une première variante, l'opération de skin-pass sera réalisée avec des cylindres de travail EDT dont les surfaces de travail présentent une rugosité Ra$_{2,5}$ comprise entre 2,05 et 2,95 $\mu$m. Si le taux d'allongement lors de l'opération de skin-pass est inférieur ou égal à 1,1%, la rugosité Ra$_{2,5}$ des surfaces de travail des cylindres de travail EDT sera de préférence comprise entre 2,50 et 2,95 $\mu$m. Si le taux d'allongement lors de l'opération de skin-pass est supérieur ou égal à 1,1%, la rugosité Ra$_{2,5}$ des surfaces de travail des cylindres de travail EDT sera de préférence comprise entre 2,05 et 2,50 $\mu$m.

Dans une autre variante, l'opération de skin-pass sera réalisée avec des cylindres de travail EBT dont les surfaces de travail présentent une rugosité Ra$_{2,5}$ comprise entre 2,90 et 4,10 $\mu$m. Si le taux d'allongement lors de l'opération de skin-pass est inférieur ou égal à 1,1%, la rugosité Ra$_{2,5}$ des surfaces de travail des cylindres de travail EBT sera de préférence comprise entre 3,50 et 4,10 $\mu$m. Si le taux d'allongement lors de l'opération de skin-pass est supérieur ou égal à 1,1%, la rugosité Ra$_{2,5}$ des surfaces de travail des cylindres de travail EBT sera de préférence comprise entre 2,90 et 3,50 $\mu$m.

L'opération de skin-pass est généralement réalisée pour une tôle 1 destinée à la fabrication de pièces de carrosserie pour véhicules automobiles.

Lorsque la tôle 1 est destinée à la fabrication d'appareils électroménagers, par exemple, on ne procède pas à cette opération supplémentaire.

La tôle 1 skin-passée ou non peut ensuite être découpée puis mise en forme, par exemple par emboutissage, pliage ou profilage, pour former une pièce que l'on peut ensuite mettre en peinture pour former, sur chaque revêtement 7, un film de peinture (ou système peinture).

Dans le cas des pièces pour les appareils électroménagers, on peut aussi soumettre éventuellement les films de peinture à un recuit par des moyens physiques et/ou chimiques, connus en eux-mêmes.

A cet effet, on peut faire passer la pièce peinte au travers d'un four à air chaud ou à induction, ou encore sous des lampes UV ou sous un dispositif diffusant des faisceaux d'électrons.

Après déformation, les surfaces extérieures des revêtements 7 de la pièce ont une ondulation Wa$_{0,8}$ inférieure ou égale à 0,60$\mu$m, voire inférieure ou égale à 0,45$\mu$m, voire inférieure ou égale à 0,43$\mu$m, voire 0,41$\mu$m voire encore 0,37$\mu$m.

Cette ondulation pourra par exemple être mesurée après déformation equi-biaxiale de 3,5%.

La maîtrise de l'ondulation $Wa_{0,8}$ avant éventuel skin-pass et après éventuel skin-pass à des valeurs inférieures ou égales à 0,55μm, respectivement 0,35μm, comme décrit ci-dessus permet de maîtriser l'ondulation $Wa_{0,8}$ après déformation à des valeurs inférieures ou égales à 0,60μm, respectivement 0,45μm, 0,43μm, 0,41μm voire 0,37μm.

Pour les applications automobiles, après phosphatation, on trempe chaque pièce dans un bain de cataphorèse, et on applique successivement, une couche de peinture d'apprêt, une couche de peinture de base, et éventuellement une couche de vernis de finition.

Avant d'appliquer la couche de cataphorèse sur la pièce, celle-ci est préalablement dégraissée puis phosphatée de manière à assurer l'adhérence de la cataphorèse.

La couche de cataphorèse assure à la pièce une protection complémentaire contre la corrosion. La couche de peinture d'apprêt, généralement appliquée au pistolet, prépare l'apparence finale de la pièce et la protège contre le gravillonnage et contre les UV. La couche de peinture de base confère à la pièce sa couleur et son apparence finale. La couche de vernis confère à la surface de la pièce une bonne résistance mécanique, une résistance contre les agents chimiques agressifs et un bon aspect de surface.

Généralement, le poids de la couche de phosphatation est compris entre 1,5 et 5 $g/m^2$.

Les films de peinture mis en œuvre pour protéger et garantir un aspect de surface optimal aux pièces, comprennent par exemple une couche de cataphorèse de 15 à 25 μm d'épaisseur, une couche de peinture d'apprêt de 35 à 45 μm d'épaisseur, et une couche de peinture de base de 40 à 50 μm d'épaisseur.

Dans les cas, où les films de peinture comprennent en outre une couche de vernis, les épaisseurs des différentes couches de peinture sont généralement les suivantes :

couche de cataphorèse : entre 15 et 25μm, de préférence inférieure à 20μm,
couche de peinture d'apprêt : inférieure à 45μm,
couche de peinture de base : inférieure à 20μm, et
couche-de vernis : inférieure à 55 μm.

Les films de peinture pourront également ne pas comprendre de couche de cataphorèse, et ne comprendre qu'une couche de peinture d'apprêt et une couche de peinture de base et éventuellement une couche de vernis.

De préférence, l'épaisseur totale des films de peinture sera inférieure à 120 μm voire 100 μm.

L'invention va à présent être illustrée par des essais donnés à titre indicatif et non limitatif.

## Exemple 1 - influence de la fraction volumique $fO_2$

Les essais réalisés dans cet exemple visent à montrer l'influence positive du respect des équations (A) et/ou (B), voire (C) et/ou (D).

Le tableau I ci-dessous détaille les conditions d'une série d'essais menés avec des valeurs différentes de Z, d, V, P et $fO_2$ et rapporte les ondulations $Wa_{0,8}$ mesurées avant skin-pass, NSKP signifiant non skin-passé.

La procédure de mesure de l'ondulation $Wa_{0,8}$ consiste à acquérir par palpage mécanique (sans patin) un profil de tôle d'une longueur de 50 mm, à 45° de la direction de laminage. On retranche au signal obtenu par palpage l'approximation de sa forme générale par un polynome de degré au moins 5. On sépare ensuite l'ondulation Wa et la rugosité moyenne arithmétique Ra par un filtre gaussien en appliquant un cutt-off de 0,8 mm.

Les colonnes de droite précisent, pour chaque essai, si les paramètres satisfaisaient aux équations (A), (B), (C) et (D).

| Essais | Z (mm) | d (mm) | V (m/min) | P (N/m2) | $fO_2$ | $Wa_{0,8}$ NSKP (μm) | Eq (A) | Eq(B) | Eq (C) | Eq (D) |
|---|---|---|---|---|---|---|---|---|---|---|
| 1 | 9 | 1,2 | 150 | 38800 | 0,21 | 0,36 | oui | oui | non | non |
| 2 | 11 | 1,2 | 150 | 48200 | 0,21 | 0,47 | oui | oui | non | non |
| 3 | 7 | 1,2 | 150 | 26300 | $1.10^{-4}$ | 0,27 | oui | oui | oui | oui |
| 4 | 9 | 1,2 | 150 | 38800 | $1.10^{-4}$ | 0,31 | oui | oui | non | oui |
| 5 | 13 | 1,2 | 150 | 59000 | $1.10^{-4}$ | 0,44 | non | oui | non | non |
| 6 | 8 | 1 | 120 | 33100 | 0,21 | 0,43 | oui | oui | non | non |
| 7 | 10 | 1 | 120 | 40700 | 0,21 | 0,50 | oui | oui | non | non |
| 8 | 14 | 1 | 120 | 60900 | 0,21 | 0,84 | non | non | non | non |
| 9 | 6,5 | 1 | 120 | 32600 | $1.10^{-4}$ | 0,31 | oui | oui | oui | oui |

(suite)

| Essais | Z (mm) | d (mm) | V (m/min) | P (N/m2) | fO$_2$ | Wa$_{0,8}$ NSKP ($\mu$m) | Eq (A) | Eq(B) | Eq (C) | Eq (D) |
|---|---|---|---|---|---|---|---|---|---|---|
| 10 | 10 | 1 | 120 | 52000 | 1.10$^{-4}$ | 0,41 | oui | oui | non | non |
| 11 | 14 | 1 | 120 | 64900 | 1.10$^{-4}$ | 0,66 | non | non | non | non |
| 12 | 8 | 1,5 | 100 | 22400 | 1.10$^{-4}$ | 0,31 | oui | oui | oui | oui |
| 13 | 15 | 1,5 | 100 | 40800 | 1.10$^{-4}$ | 0,37 | oui | oui | non | non |

Ainsi, l'utilisation de paramètres satisfaisant l'équation (A) et/ou (B) permet d'atteindre des ondulations avant skin-pass Wa$_{0,8}$ inférieure à 0,55 $\mu$m.

L'utilisation de paramètres satisfaisant l'équation (C) et/ou (D) permet d'atteindre des ondulations avant skin-pass Wa$_{0,8}$ encore plus faibles et inférieures ou égales à 0,35 $\mu$m.

Des ondulations avant skin-pass Wa$_{0,8}$ inférieures ou égales à 0,35 $\mu$m peuvent dans certains cas être atteintes sans respecter les équations (C) et/ou (D), notamment en respectant les équations (A) et/ou (B) et en utilisant des cylindres de travail lisses pour le laminage à froid et/ou de rugosité particulière pour le skin-pass, comme exposé ci-dessous.

## Exemple 2 - influence du laminage à froid avec des cylindres de travail lisses

Les essais réalisés dans cet exemple visent à montrer l'influence positive d'un laminage à froid effectué avec des cylindres de travail lisses, par rapport à un laminage réalisé avec des cylindres de travail EDT dont les surfaces de travail présentent une rugosité plus importante.

A cet effet, des substrats en acier sont soumis à un laminage à froid pour atteindre une épaisseur de 0,8 mm, en utilisant soit des cylindres de travail dits lisses dont les surfaces de travail présentent une rugosité Ra$_{2,5}$ de 0,5 $\mu$m, soit des cylindres de travail EDT dont les surfaces de travail présentent une rugosité Ra$_{2,5}$ de 3 $\mu$m. Les substrats 3 sont ensuite revêtus par un revêtement de zinc par trempé à chaud dans un bain de zinc comprenant 0,18 % en poids d'aluminium, dont la température est de 460 °C, et sont essorés avec de l'azote pour former des revêtements de zinc présentant une épaisseur de 6,5 $\mu$m.

Après refroidissement complet des tôles 1 ainsi obtenues, celles-ci sont soumises à une opération de skin-pass réalisée avec des cylindres de travail gravés EBT, dont les surfaces de travail présentent une rugosité Ra$_{2,5}$ de 5 $\mu$m, avant d'être découpées et mises en forme par emboutissage.

Les valeurs d'ondulation Wa$_{0,8}$ des surfaces extérieures 21 des revêtements 7 sont relevées à l'issue de chacune des étapes du procédé, à savoir après le laminage à froid (LAF), après l'opération de skin-pass (SKP) et après la mise en forme (DEF). Cette dernière est réalisée par déformation équi-biaxiale de 3,5% avec un outil de Marciniak.

Les résultats des mesures de Wa$_{0,8}$ sont regroupés dans le tableau II.

Comme on peut le constater, l'utilisation du laminage lisse permet de réduire l'ondulation Wa$_{0,8}$ que ce soit à l'issue du laminage à froid, du skin-pass ou de l'étape de mise en forme.

Tableau II

| Essais | Ra$_{2,5}$($\mu$m) cylindres de travail LAF | Wa$_{0,8}$ ($\mu$m) après LAF | Wa$_{0,8}$ ($\mu$m) après SKP | Wa$_{0,8}$ ($\mu$m) après DEF | Eq (A) | Eq (B) | Eq (C) | Eq (D) |
|---|---|---|---|---|---|---|---|---|
| 14 | 3 | 0,52 | 0,39 | 0,41 | oui | oui | non | non |
| 15 | 0,5 | 0,15 | 0,35 | 0,34 | oui | oui | non | non |

## Exemple 3 - influence du skin-pass

Les essais réalisés dans cet exemple visent à montrer l'influence positive d'un skin-pass réalisé en utilisant des cylindres de travail dont les surfaces de travail présentent une certaine rugosité Ra$_{2,5}$.

A cet effet, des substrats 3 en acier sont soumis à un laminage à froid pour former des substrats laminés à froid dont l'épaisseur est de 0,7 mm.

Les substrats 3 sont ensuite revêtus par un revêtement de zinc par trempé à chaud dans un bain de zinc comprenant 0,18 % en poids d'aluminium, dont la température est de 460 °C, et sont essorés avec de l'azote pour former des revêtements de zinc présentant une épaisseur de 6,5 $\mu$m.

Les tôles 1 ainsi obtenues sont divisées en deux lots.

Avant d'être mises en forme par déformation équi-biaxiale de 3,5% avec un outil de Marciniak, les tôles 1 issues du premier lot sont soumises à un skin-pass réalisé avec cylindres de travail EDT et avec un taux d'allongement de 1,4%. La rugosité $Ra_{2,5}$ des surfaces de travail est de 2,20 $\mu$m.

Les tôles 1 issues du deuxième lot sont soumises à une opération de skin-pass avec le même taux d'allongement mais avec des cylindres de travail gravés EDT, dont les surfaces de travail présentent une rugosité $Ra_{2,5}$ de 2,60$\mu$m.

Les résultats des essais sont regroupés dans le tableau III.

Tableau III

| Essais | $Ra_{2,5}(\mu m)$ cylindres de travail du SKP | $Wa_{0,8}(\mu m)$ après LAF | $Wa_{0,8}(\mu m)$ après SKP | $Wa_{0,8}(\mu m)$ après DEF | Eq (A) | Eq (B) | Eq (C) | Eq (D) |
|---|---|---|---|---|---|---|---|---|
| 16 | 2,20 | 0,42 | 0,28 | 0,37 | oui | oui | non | non |
| 17 | 2,60 | 0,42 | 0,41 | 0,47 | oui | oui | non | non |

## Revendications

1. Procédé de réalisation d'une tôle (1) comprenant un substrat (3) en acier dont au moins une face (5) est revêtue par un revêtement métallique (7) comprenant de l'Al, le reste du revêtement métallique (7) étant du Zn, des impuretés inévitables et éventuellement un ou plusieurs éléments additionnels choisis parmi Si, Sb, Pb, Ti, Ca, Mn, Sn, La, Ce, Cr, Zr ou Bi, la teneur en poids de chaque élément additionnel dans le revêtement métallique (7) étant inférieure à 0,3%, le revêtement métallique (7) ayant une teneur en poids d'aluminium comprise entre 0,2 et 0,7%, le procédé comprenant au moins des étapes de :

   - fourniture du substrat (3),
   - dépôt d'un revêtement métallique (7) sur au moins une face (5) par trempe du substrat (3) dans un bain pour obtenir la tôle (1),
   - essorage du revêtement métallique (7) par au moins une buse (17) projetant par au moins une sortie (25) un gaz d'essorage sur le revêtement métallique (7), la tôle (1) défilant devant la buse, le gaz d'essorage étant éjecté de la buse (17) le long d'une direction principale d'éjection (E),
   - solidification du revêtement métallique (7),
   - la surface extérieure (21) du revêtement métallique (7) présentant, après solidification et avant éventuelle opération de skin-pass, une ondulation $Wa_{0,8}$ inférieure ou égale à 0,55$\mu$m,

   procédé dans lequel l'une au moins des équations suivantes est satisfaite:

   $$\frac{Z}{d} + 18\ln\left(\frac{Z}{d}\right) < 8\ln\left(\frac{P}{V}\right) - 27,52 \qquad \text{(A)}$$

   $$fO_2 < \frac{2,304.10^{-3}}{\left(27,52 + \frac{Z}{d} + 8\ln\left(\frac{V}{P}\left(\frac{Z}{d}\right)^{2,25}\right)\right)^2} \qquad \text{(B)}$$

   où :

   Z est la distance entre la tôle (1) et la buse (17) le long de la direction principale d'éjection (E), Z étant exprimée en mm,
   d est la hauteur moyenne de la sortie (25) de la buse (17) le long du sens (S) de défilement de la tôle (1) devant la buse (17), d étant exprimée en mm,
   V est la vitesse de défilement de la tôle (1) devant la buse (17), V étant exprimée en m.s$^{-1}$,
   P est la pression du gaz d'essorage dans la buse (17), P étant exprimée en N.m$^{-2}$, et $fO_2$ est la fraction volumique d'oxygène dans le gaz d'essorage.

2. Procédé selon la revendication 1, dans lequel l'une au moins des équations suivantes est satisfaite :

$$\frac{Z}{d}+18\ln\left(\frac{Z}{d}\right)<8\ln\left(\frac{P}{V}\right)-36,32 \qquad \text{(C)}$$

$$fO_2 < \frac{2,304.10^{-3}}{\left(36,32+\frac{Z}{d}+8\ln\left(\frac{V}{P}\left(\frac{Z}{d}\right)^{2,25}\right)\right)^2} \qquad \text{(D)}$$

3. Procédé selon la revendication 1 ou 2, dans lequel le procédé comprend, avant l'étape de dépôt, une étape de laminage à froid de la tôle (1) dont au moins la dernière passe est réalisée avec des cylindres de travail rectifiés et non gravés dont les surfaces de travail présentent une rugosité $Ra_{2,5}$ inférieure ou égale à 0,5 $\mu$m.

4. Procédé selon la revendication 2 ou 3, dans lequel l'ondulation $Wa_{0,8}$ de la surface extérieure du revêtement métallique (7) après solidification et avant éventuelle opération de skin-pass est inférieure ou égale à 0,35 $\mu$m.

5. Procédé selon l'une des revendications précédentes, le procédé comprenant une étape de skin-pass de la tôle (1) avec des cylindres de travail EDT dont les surfaces de travail présentent une rugosité $Ra_{2,5}$ comprise entre 2,05 et 2,95 $\mu$m.

6. Procédé selon l'une des revendications 1 à 4, le procédé comprenant une étape de skin-pass de la tôle (1) avec des cylindres de travail EBT dont les surfaces de travail présentent une rugosité $Ra_{2,5}$ comprise entre 2,90 et 4,10 $\mu$m.

7. Procédé selon l'une des revendications précédentes, dans lequel le revêtement métallique (7) a une teneur en poids d'aluminium inférieure ou égale à 0,6%.

8. Procédé selon la revendication 7, dans lequel le revêtement métallique (7) a une teneur en poids d'aluminium inférieure ou égale à 0,5%.

9. Tôle (1) comprenant un substrat (3) en acier dont au moins une face (5) est revêtue par un revêtement métallique (7) déposé par trempe du substrat (3) dans un bain, le revêtement comprenant entre 0,2 et 0,7% en poids d'Al, le reste du revêtement métallique (7) étant du Zn, des impuretés inévitables et éventuellement un ou plusieurs éléments additionnels choisis parmi Si, Sb, Pb, Ti, Ca, Mn, Sn, La, Ce, Cr, Zr ou Bi, la teneur en poids de chaque élément additionnel dans le revêtement métallique (7) étant inférieure à 0,3%, la surface extérieure du revêtement métallique (7) présentant une ondulation $Wa_{0,8}$, avant éventuelle opération de skin-pass, inférieure ou égale à 0,35$\mu$m.

10. Tôle selon la revendication 9, dans laquelle le revêtement métallique (7) a une teneur en poids d'aluminium inférieure ou égale à 0,6%.

11. Tôle selon la revendication 10, dans laquelle le revêtement métallique (7) a une teneur en poids d'aluminium inférieure ou égale à 0,5%.

12. Pièce obtenue par déformation d'une tôle selon l'une des revendications 9 à 11, dans laquelle la surface extérieure du revêtement métallique présente une ondulation $Wa_{0,8}$ inférieure ou égale à 0,43$\mu$m.

13. Pièce selon la revendication 12, dans laquelle la surface extérieure du revêtement métallique présente une ondulation $Wa_{0,8}$ inférieure ou égale à 0,41$\mu$m.

14. Pièce selon la revendication 13, dans laquelle la surface extérieure du revêtement métallique présente une ondulation $Wa_{0,8}$ inférieure ou égale à 0,37$\mu$m.

15. Pièce selon l'une des revendications 12 à 14, la pièce comprenant en outre un film de peinture sur le revêtement métallique (7).

**16.** Pièce selon la revendication 15, dans laquelle l'épaisseur du film de peinture est inférieure ou égale à 120 $\mu$m.

**17.** Pièce selon la revendication 16, dans laquelle l'épaisseur du film de peinture est en inférieure ou égale à 100 $\mu$m.

**18.** Véhicule terrestre à moteur comprenant une carrosserie, la carrosserie comprenant une pièce selon l'une des revendications 12 à 17.

**Patentansprüche**

**1.** Verfahren zum Herstellen eines Blechs (1), das ein Substrat (3) aus Stahl aufweist, von dem mindestens eine Oberfläche (5) mit einer Al enthaltenden metallischen Beschichtung (7) beschichtet ist, wobei der Rest der metallischen Beschichtung (7) aus Zn, unvermeidbaren Verunreinigungen und ggf. einem oder mehreren aus Si, Sb, Pb, Ti, Ca, Mn, Sn, La, Ce, Cr, Zr oder Bi ausgewählten zusätzlichen Elementen besteht, wobei der gewichtsbezogene Gehalt jedes zusätzlichen Elementes in der metallischen Beschichtung (7) weniger als 0,3 % beträgt, die metallische Beschichtung (7) einen gewichtsbezogenen Gehalt an Aluminium zwischen 0,2 und 0,7 % aufweist und das Verfahren mindestens folgende Schritte aufweist:

- Bereitstellung des Substrats (3),
- Aufbringung einer metallischen Beschichtung (7) auf mindestens einer Oberfläche (5) durch Eintauchen des Substrats (3) in ein Bad zum Erhalt des Blechs (1),
- Abstreifen der metallischen Beschichtung (7) durch mindestens eine Düse (17), die durch mindestens einen Auslaß (25) ein Abstreifgas auf die metallische Beschichtung (7) richtet, wobei das Blech (1) vor der Düse vorbeiläuft und das Abstreifgas aus der Düse (17) längs einer Hauptausstoßrichtung (E) ausgestoßen wird,
- Erstarren der metallischen Beschichtung (7),
- wobei die äußere Oberfläche (21) der metallischen Beschichtung (7) nach Erstarrung und vor einem eventuellen Skin-Pass-Vorgang eine Welligkeit Wa$_{0,8}$ aufweist, die kleiner oder gleich 0,55 $\mu$m ist,

wobei in dem Verfahren mindestens eine der folgenden Gleichungen eingehalten wird:

$$\frac{Z}{d} + 18 ln\left(\frac{Z}{d}\right) < 8 ln\left(\frac{P}{V}\right) - 27,52 \qquad (A)$$

$$fO_2 < \frac{2,304 \cdot 10^{-3}}{\left(27,52 + \frac{Z}{d} + 8 ln\left(\frac{V}{P}\left(\frac{Z}{d}\right)^{2,25}\right)\right)^2} \qquad (B)$$

wobei:

Z der Abstand zwischen dem Blech (1) und der Düse (17) längs der Hauptausstoßrichtung (E) ist und Z in mm ausgedrückt ist,
d die mittlere Höhe des Auslasses (25) der Düse (17) längs der Laufrichtung (S) des Blechs (1) vor der Düse (17) ist und d in mm ausgedrückt ist,
V die Laufgeschwindigkeit des Blechs (1) vor der Düse (17) ist und V in m.s$^{-1}$ ausgedrückt ist,
P der Druck des Abstreifgases in der Düse (17) ist und P in N.m$^{-2}$ ausgedrückt ist, und
fO$_2$ der volumenbezogene Anteil von Sauerstoff in dem Abstreifgas ist.

**2.** Verfahren nach Anspruch 1, bei dem mindestens eine der folgenden Gleichungen erfüllt ist:

$$\frac{Z}{d} + 18 ln\left(\frac{Z}{d}\right) < 8 ln\left(\frac{P}{V}\right) - 36,32 \qquad (C)$$

$$fO_2 < \frac{2{,}304 \cdot 10^{-3}}{\left(36{,}32 + \dfrac{Z}{d} + 81n\left(\dfrac{V}{P}\left(\dfrac{Z}{d}\right)^{2{,}25}\right)\right)^2} \tag{D}$$

3. Verfahren nach Anspruch 1 oder 2, bei dem das Verfahren vor dem Schritt der Aufbringung einen Kaltwalzschritt des Blechs (1) aufweist, von dem mindestens der letzte Durchgang mit feingeschliffenen und nicht gravierten Arbeitszylindern ausgeführt wird, deren Arbeitsoberflächen eine Rauheit $Ra_{2{,}5}$ aufweisen, die kleiner oder gleich 0,5 μm ist.

4. Verfahren nach Anspruch 2 oder 3, bei dem die Welligkeit $Wa_{0{,}8}$ der äußeren Oberfläche der metallischen Beschichtung (7) nach Erstarrung und vor einem eventuellen Skin-Pass-Vorgang kleiner oder gleich 0,35 μm ist.

5. Verfahren nach einem der vorangehenden Ansprüche, wobei das Verfahren einen Skin-Pass-Schritt des Blechs (1) mit EDT-Arbeitszylindern aufweist, deren Arbeitsoberflächen eine Rauheit $Ra_{2{,}5}$ aufweisen, die zwischen 2,05 und 2,95 μm liegt.

6. Verfahren nach einem der Ansprüche 1 bis 4, wobei das Verfahren einen Skin-Pass-Schritt des Blechs (1) mit EBT-Arbeitszylindern aufweist, deren Arbeitsoberflächen eine Rauheit $Ra_{2{,}5}$ aufweisen, die zwischen 2,90 und 4,10 μm liegt.

7. Verfahren nach einem der vorangehenden Ansprüche, bei dem die metallische Beschichtung (7) einen gewichtsbezogenen Gehalt an Aluminium aufweist, der kleiner oder gleich 0,6 % ist.

8. Verfahren nach Anspruch 7, bei dem die metallische Beschichtung (7) einen gewichtsbezogenen Gehalt an Aluminium aufweist, der kleiner oder gleich 0,5 % ist.

9. Blech (1), welches ein Substrat (3) aus Stahl aufweist, von dem mindestens eine Oberfläche (5) mit einer metallischen Beschichtung (7) beschichtet ist, die durch Eintauchen des Substrats (3) in ein Bad aufgebracht wurde, wobei die Beschichtung (7) einen gewichtsbezogenen Gehalt an Aluminium zwischen 0,2 und 0,7 % aufweist, wobei der Rest der metallischen Beschichtung (7) aus Zink, unvermeidbaren Verunreinigungen und ggf. einem oder mehreren aus Si, Sb, Pb, Ti, Ca, Mn, Sn, La, Ce, Cr, Zr oder Bi ausgewählten zusätzlichen Elementen besteht, wobei der gewichtsbezogene Gehalt jedes zusätzlichen Elementes in der metallischen Beschichtung (7) weniger als 0,3 % beträgt, wobei die äußere Oberfläche der metallischen Beschichtung (7) eine Welligkeit $Wa_{0{,}8}$, vor eventuellem Skin-Pass-Vorgang, aufweist, die kleiner oder gleich 0,35 μm ist.

10. Blech nach Anspruch 9, bei dem die metallische Beschichtung (7) einen gewichtsbezogenen Gehalt an Aluminium aufweist, der kleiner oder gleich 0,6 % ist.

11. Blech nach Anspruch 10, bei dem die metallische Beschichtung (7) einen gewichtsbezogenen Gehalt an Aluminium aufweist, der kleiner oder gleich 0,5 % ist.

12. Teil, das durch Umformung eines Blechs nach einem der Ansprüche 9 bis 11 erhalten ist, bei dem die äußere Oberfläche der metallischen Beschichtung eine Welligkeit $Wa_{0{,}8}$ aufweist, die kleiner oder gleich 0,43 μm ist.

13. Teil nach Anspruch 12, bei dem die äußere Oberfläche der metallischen Beschichtung eine Welligkeit $Wa_{0{,}8}$ aufweist, die kleiner oder gleich 0,41 μm ist.

14. Teil nach Anspruch 13, bei dem die äußere Oberfläche der metallischen Beschichtung eine Welligkeit $Wa_{0{,}8}$ aufweist, die kleiner oder gleich 0,37 μm ist.

15. Teil nach einem der Ansprüche 12 bis 14, wobei das Teil außerdem einen Lackierungsfilm auf der metallischen Beschichtung (7) aufweist.

16. Teil nach Anspruch 15, bei dem die Dicke des Lackierungsfilms kleiner oder gleich 120 μm ist.

**17.** Teil nach Anspruch 16, bei dem die Dicke des Lackierungsfilms kleiner oder gleich 100 $\mu$m ist.

**18.** Motorangetriebenes Landfahrzeug mit einer Karosserie, wobei die Karosserie ein Teil nach einem der Ansprüche 12 bis 17 aufweist.

**Claims**

**1.** A method for manufacturing a metal sheet (1) comprising a steel substrate (3), at least one face (5) of which is coated with a metal coating (7) comprising Al, the remainder of the metal coating (7) being Zn, inevitable impurities and optionally one or more additional elements selected from Si, Sb, Pb, Ti, Ca, Mn, Sn, La, Ce, Cr, Zr or Bi, the weight content of each additional element in the metal coating (7) being less than 0.3%, the metal coating (7) having a weight content of aluminum comprise between 0.2 and 0.7%, the method comprising at least steps for:

- providing the substrate (3),
- depositing a metal coating (7) on at least one face (5) by dipping the substrate (3) in a bath for obtaining the metal sheet (1),
- wiping the metal coating (7) with at least one nozzle (17) projecting through at least one outlet (25) a wiping gas on the metal coating (7), the metal sheet (1) running in front of the nozzle, the wiping gas being ejected from the nozzle (17) along a main ejection direction (E),
- solidifying the metal coating (7),
- the outer surface (21) of the metal coating (7) having, after solidification and before an optional skin-pass operation, a waviness $Wa_{0.8}$ of less than or equal to $0.55\mu$m,

a method in which at least one of the following equations is verified:

$$\frac{Z}{d}+18\ln\left(\frac{Z}{d}\right)<8\ln\left(\frac{P}{V}\right)-27.52 \qquad (A)$$

$$fO_2<\frac{2.304.10^{-3}}{\left(27.52+\frac{Z}{d}+8\ln\left(\frac{V}{P}\left(\frac{Z}{d}\right)^{2.25}\right)\right)^2} \qquad (B)$$

wherein:

Z is the distance between the metal sheet (1) and the nozzle (17) along the main ejection direction (E), Z being expressed in mm,
d is the average height of the outlet (25) of the nozzle (17) along the running direction (S) of the metal sheet (1) in front of the nozzle (17), d being expressed in mm,
V is the running speed of the metal sheet (1) in front of the nozzle (17), V being expressed in m.s$^{-1}$,
P is the pressure of the wiping gas in the nozzle (17), P being expressed in N.m$^{-2}$, and
$fO_2$ is the volume fraction of oxygen in the wiping gas.

**2.** The method according to claim 1, wherein at least one of the following equations is verified:

$$\frac{Z}{d}+18\ln\left(\frac{Z}{d}\right)<8\ln\left(\frac{P}{V}\right)-36.32 \qquad (C)$$

$$fO_2 < \frac{2.304.10^{-3}}{\left(36.32 + \frac{Z}{d} + 8\ln\left(\frac{V}{P}\left(\frac{Z}{d}\right)^{2.25}\right)\right)^2} \qquad (D)$$

3. The method according to claim 1 or 2, wherein the method comprises, before the deposition step, a step for cold rolling the metal sheet (1), at least the last pass being achieved with rectified and non-etched work rolls for which the work surfaces have a roughness $Ra_{2.5}$ of less than or equal to 0.5 $\mu$m.

4. The method according to claim 2 or 3, wherein the waviness $Wa_{0.8}$ of the outer surface of the metal coating (7) after solidification and before an optional skin-pass operation is less than or equal to 0.35 $\mu$m.

5. The method according to one of the preceding claims, the method comprising a step for a skin-pass of the metal sheet (1) with EDT work rolls, the work surface of which have a roughness $Ra_{2.5}$ comprises between 2.05 and 2.95 $\mu$m.

6. The method according to one of claims 1 to 4, the method comprising a step for skin-pass of the metal sheet (1) with EBT work rolls, the working surface of which have a roughness $Ra_{2.5}$ comprised between 2.90 and 4.10 $\mu$m.

7. The method according to one of the preceding claims, wherein the metal coating (7) has a weight content of aluminum less than or equal to 0.6%.

8. The method according to claim 7, wherein the metal coating (7) has a weight content of aluminum less than or equal to 0.5%.

9. A metal sheet (1) comprising a steel substrate (3), at least one face (5) of which is coated with a metal coating (7) deposited by dipping the substrate (3) in a dip bath, said coating comprising between 0.2 and 0.7% by weight of Al, the remainder of the metal coating (7) being Zn, inevitable impurities and optionally one or more additional elements selected from among Si, Sb, Pb, Ti, Ca, Mn, Sn, La, Ce, Cr, Zr or Bi, the weight content of each additional element in the metal coating (7) being less than 0.3%, the outer surface of the metal coating (7) having a waviness $Wa_{0.8}$, before an optional skin-pass operation, of less than or equal to 0.35 $\mu$m.

10. The metal sheet according to claim 9, wherein the metal coating (7) has a weight content of aluminum less than or equal to 0.6%.

11. The metal sheet according to claim 10, wherein the metal coating (7) has a weight content of aluminum less than or equal to 0.5%.

12. A part obtained by deformation of a metal sheet according to one of claims 9 to 11, wherein the outer surface of the metal coating has a waviness $Wa_{0.8}$ of less than or equal to 0.43$\mu$m.

13. The part according to claim 12, wherein the outer surface of the metal coating has a waviness $Wa_{0.8}$ of less than or equal to 0.41 $\mu$m.

14. The part according to claim 13, wherein the outer surface of the metal coating has a waviness $Wa_{0.8}$ of less than or equal to 0.37 $\mu$m.

15. The part according to one of claims 12 to 14, the part further comprising a film of paint on the metal coating (7).

16. The part according to claim 15, wherein the thickness of the film of paint is less than or equal to 120 $\mu$m.

17. the part according to claim 16, wherein the thickness of the film of paint is less than or equal to 100 $\mu$m.

18. A land motor vehicle comprising a body, the body comprising a part according to one of claims 12 to 17.

**FIG.1**

**FIG.2**

**FIG.3**

**FIG.4**